# EUROPEAN PATENT APPLICATION

(11) **EP 4 848 505 A1**
(43) Date of publication of application: **02.12.2026**
(21) Application number: 26181550.0
(22) Date of filing: 28.05.2026
(51) Int. Cl.: H02B 1/30, H01H 9/22, H02B 1/46, H02G 5/08

(54) **HANDLE AND BASE**

(30) Priority: 28.05.2025 US 202563813154 P; 04.03.2026 US 202619556600
(71) Applicant: Vertiv Corporation, Westerville, OH 43082 (US)
(72) Inventor: KATUPURATHILLAM, Sreehari Thekkekara, Westerville, 43082 (US)
(74) Representative: Cousens, Nico

(57) **Abstract**

A system may include a base (402) configured to couple to a door panel (106), including: at least one base fastener aperture (506a-d) configured to receive a base fastener, wherein the base fastener is configured to secure the base (402) to the door panel (106); and a connection aperture (404) configured to align with a door panel opening (908) and facilitate a connection of at least one of a handle or a handle adapter (204) to a stem of a switch. The system may include a stem adapter (406) configured to rotationally couple to the base (402), the stem adapter (406) including: a socket (412) disposed on an internal side of the stem adapter (406) and configured to receive a first end of the stem of the switch, at least one adapter fastener aperture (602a, b) configured to receive a handle fastener (408a, b), wherein the handle fastener (408a, b) is configured to couple the stem adapter(406) to the handle assembly or the handle adapter (204).

## Description

### CROSS REFERENCE TO RELATED APPLICATION

This application claims the benefit of priority of U.S. Application Number 63/813,154, filed May 28, 2025.

### TECHNICAL FIELD

The present disclosure relates to power systems and, more particularly, to handles for electrical control panels and boxes.

### BACKGROUND

Tap-off boxes in electrical systems are enclosures used to draw power from upstream power components, such as busways, to supply downstream equipment or distribution sub-systems. Due to the risks inherent to high-power electrical systems, tap-off boxes often require handles and/or latch mechanisms that allow technicians to safely open the box without risk of electrocution. Current handles and/or latch mechanisms for tap-off boxes are overly expensive due to high production costs. Therefore, there is a need for a handle and/or latch mechanism for a tap-off box that can be produced with lower production costs than the products that are currently available.

### SUMMARY

In a first aspect, a support assembly for a handle for a electrical box is disclosed. In embodiments, the support assembly includes a base configured to couple to a first side of a door panel and over a door panel opening. In one or more embodiments, the base includes at least one base fastener aperture configured to receive a base fastener, wherein the base fastener is configured to secure the base to the door panel. In one or more embodiments, the base includes a connection aperture configured to align with the door panel opening and facilitate a connection of at least one of a handle or a handle adapter to a stem of a switch within the electrical box. In one or more embodiments, the support assembly includes a stem adapter configured to rotationally couple to the base, the stem adapter including: a socket disposed on an internal side of the stem adapter and configured to receive a first end of the stem of the switch; at least one adapter fastener aperture configured to receive a handle fastener, wherein the handle fastener is configured to couple the stem adapter to the handle assembly or the handle adapter, wherein a rotation of the handle assembly or the handle adapter is configured to cause the stem of the switch to rotate when the stem is received within the socket; and a lock aperture configured to receive a lock pin from the handle assembly, wherein the lock aperture receiving the lock pin prevents the at least one of the handle assembly or the handle adapter from rotating relative to the base.

In a second aspect, a handle assembly for a panel is disclosed. In one or more embodiments, the handle assembly includes: a handle arm configured to couple to a stem adapter, wherein the handle arm is rotationally coupled to a base that is coupled to a door panel, a lock pin configured to insert into a lock aperture of the base, wherein an insertion of the lock pin into the lock aperture prevents a rotation of the handle assembly relative to the base; and a trigger arm mechanically coupled to the handle arm and the lock pin, wherein the trigger arm is configured to release the lock pin from the lock aperture when the trigger arm is activated.

In a third aspect, an electrical box is disclosed. In one or more embodiments, the electrical box includes a shell including a door panel; a power switch within the shell and disposed on an opposite side of the door panel, the power switch including a stem extending from the opposite side of the door panel toward the door panel, the stem including a catch element; and a support assembly for at least one of a handle assembly or a handle adapter including: a base configured to couple to a first side of the door panel and over a door panel opening, including: at least one base fastener aperture configured to receive a base fastener, wherein the base fastener is configured to secure the base to the door panel; and a connection aperture configured to align with the door panel opening and facilitate a connection of the handle assembly to a stem of a switch; and a stem adapter configured to rotationally couple to the base, the stem adapter including: a socket disposed on an internal side of the stem adapter and configured to receive a first end of the stem of the switch; at least one adapter fastener aperture configured to receive a handle fastener, wherein the handle fastener is configured to couple the stem adapter to a handle assembly or a handle adapter; and a lock aperture configured to receive a lock pin, wherein the lock aperture receiving the lock pin prevents the at least one of the handle assembly and the handle adapter from rotating relative to the base.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

The numerous advantages of the disclosure may be better understood by those skilled in the art by reference to the accompanying figures.
FIG. 1 illustrates a perspective view of a tap-off box, in accordance with one or more embodiments of the disclosure.
FIG. 2 illustrates a perspective view of a tap-off box, in accordance with one or more embodiments of the disclosure.
FIG. 3 is a drawing depicting a side view of the tap-off box, in accordance with one or more embodiments of the disclosure.
FIG. 4 illustrates an exploded view of the support assembly, in accordance with one or more embodiments of the disclosure.
FIGS. 5A and 5B illustrate perspective views of the base, in accordance with one or more embodiments of the disclosure.
FIGS. 6A and 6B illustrate perspective views of the stem adapter, in accordance with one or more embodiments of the disclosure.
FIG. 7 is a perspective view of the locking plate, in accordance with one or more embodiments of the disclosure.
FIGS. 8A and 8B illustrate perspective views of the back cover, in accordance with one or more embodiments of the disclosure.
FIGS. 9A to 9C illustrate perspective views of the handle adapter coupled to the base, in accordance with one or more embodiments of the disclosure.
FIG. 9D illustrates an exploded view of a handle, handle adapter, base, and door panel, in accordance with one or more embodiments of the disclosure.
FIG. 10 illustrates a top perspective view of the handle assembly rotationally coupled to the support assembly, in accordance with one or more embodiments of the disclosure.
FIG. 11 illustrates a bottom perspective view of the handle assembly rotationally coupled to the support assembly, in accordance with one or more embodiments of the disclosure.
FIG. 12 illustrates a perspective view of the handle arm, in accordance with one or more embodiments of the disclosure.
FIG. 13 illustrates a perspective view of a trigger arm assembly that includes the trigger arm, in accordance with one or more embodiments of the disclosure.
FIGS. 14A and 14B illustrate perspective views of the cover, in accordance with one or more embodiments of the disclosure.
FIGS. 15A-15J illustrate underside perspective views of a handle-base unit reversibly coupling to the stem extension, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present), and B is false (or not present), A is false (or not present), and B is true (or present), and both A and B are true (or present).

In addition, the use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein, any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Disclosed is a system for attaching a handle to a tap-off box. The system may be configured to attach a switch-only type of handle for changing the status of a power switch of a tap-off box. The system may also be configured to attach a handle that both operates to switch the status of a power switch inside the tap-off box and to lock and unlock a door panel of the tap-off box (e.g., the locking function preventing the door panel from opening while the tap-off box is energized). The handle may include an override function that allows the door panel to be opened while the tap-off box is energized. The system may include a support assembly that attaches to the panel of the tap-off box and allows for the attachment of different handles and handle adapters.

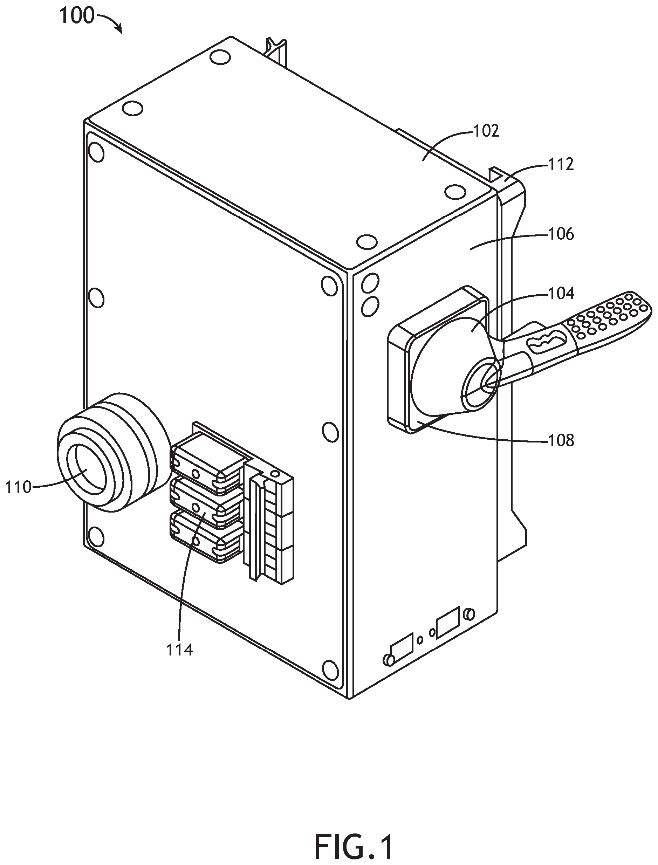

FIG. 1 illustrates a perspective view of an electrical box 100, in accordance with one or more embodiments of the disclosure. The electrical box 100 may be configured as a tap-off box, a breaker box, junction box, a termination box, or other box used in electrical distribution systems. For example, the electrical box 100 may be used to extend or modify electrical cabling routes. The electrical box 100 may include a shell 102 that houses wiring circuits and connections. The electrical box 100 may further include, or be coupled to, a handle assembly 104 that is coupled to a panel 106 or door (e.g., a door panel) of the shell 102 via a support assembly 108. The support assembly 108 is fixed to the panel 106, while the handle assembly 104 is rotationally coupled to the support assembly 108. For example, the handle assembly 104 may be mechanically coupled to a power switch inside the shell 102 on the opposite side of the panel 106 (e.g., via a stem of the switch) so that when the handle assembly 104 is rotated relative to the support assembly, the switch is changed to a different setting. For instance, a rotation of the handle assembly may cause the switch to move between an ON position and an OFF position. In another instance, the rotation of the handle assembly may cause the switch to move between a Backup Distribution System (BDS) position (e.g., an alternative distribution system) and an ON or OFF position. The electrical box 100 may include one or more conduits 110 for receiving electrical wires, one or more brackets 112 for mounting the electrical box 100, and other electronic componentry 114, such as fuses.

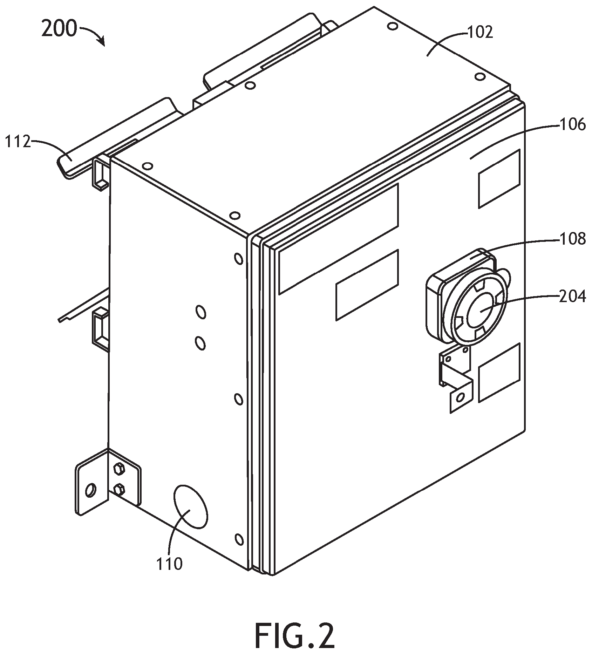

FIG. 2 illustrates a perspective view of an electrical box 200, in accordance with one or more embodiments of the disclosure. The electrical box 200 may include one or more components of electrical box 100 and vice versa. In embodiments, the electrical box 200 may further include, or be coupled to, a handle adapter 204 that is coupled to a panel 106 or door of the shell 102 via a support assembly 108. The support assembly 108 is fixed to the panel 106, while the handle adapter 204 is rotationally coupled to the support assembly 108. The handle adapter 204 may be couplable to the handle assembly 104 or other handle support element.

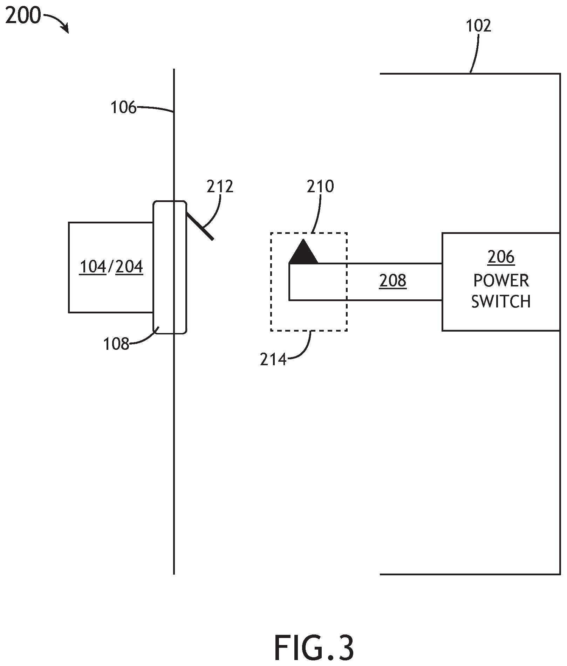

In embodiments, the handle assembly 104 and/or handle adapter 204 is configured to both change a status of the power switch and latch the panel 106 to the shell 102 of the tap-off box. For example, the panel 106 may be configured as a door that can be opened to access the power switch and other electronic componentry. The handle assembly 104 and/or handle adapter 204 may be coupled to the power switch inside the electrical box 200 (e.g., where rotation of the handle assembly 104 and/or handle adapter 204 relative to the support assembly causes a change in the status of the power switch) and may be couplable to a catch element on the stem. As shown in FIG. 3.

FIG. 3 is a drawing depicting a side view of the electrical box 200, in accordance with one or more embodiments of the disclosure. The panel 106 of the electrical box 200 is shown in an open position, away from the shell 102. The power switch 206 is coupled in place within the tap-off box, with the stem 208 extending from the power switch 206. The rotation of the stem 208 causes a change in the status of the power switch 206, as described above. The catch element 210 on the stem interacts with the support assembly 108 at a lock element 212. The lock element 212 may be positioned on either side of the panel 106. When the panel 106 is in a closed position, the stem 208 is mechanically coupled to the handle assembly 104 or handle adapter 204 via the support assembly. When coupled, a turning of the handle assembly and/or handle adapter results in a turning of the stem 208, resulting in a change in the status of the power switch 206. In embodiments, the catch element 210 is disposed on a stem extension 214 (e.g., indicated by the dotted box) that is coupled to the stem 208.

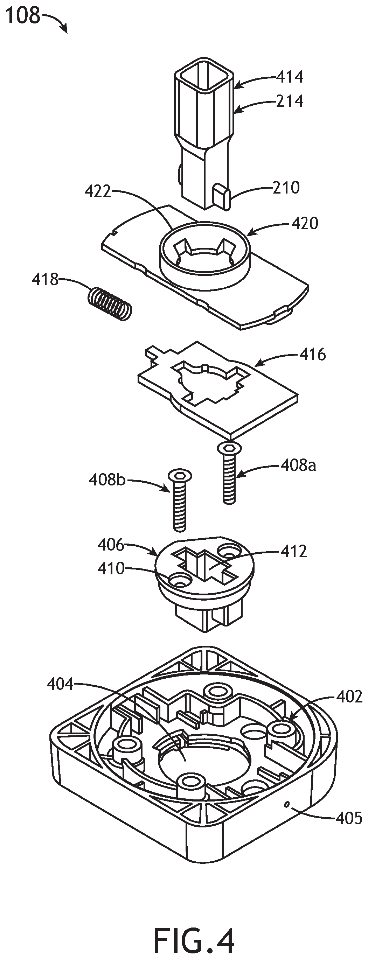

FIG. 4 illustrates an exploded view of the support assembly 108, in accordance with one or more embodiments of the disclosure. The support assembly 108 may include, or may exclude, the stem extension 214.

In embodiments, the support assembly 108 includes a base 402 configured to couple to a first side of the panel 106. The base may include a connection aperture 404 (e.g., a central hole) configured to facilitate a connection or coupling of the door handle (e.g., a handle assembly and/or handle adapter) to the stem 208.

In embodiments, the support assembly 108 includes a stem adapter 406 configured to rotationally couple to the base 402 at the connection aperture 404. For example, the stem adapter 406 may be couplable to the handle assembly 104 and/or handle adapter 204 via one or more handle fasteners 408a, 408b (e.g., screws). A perimeter 410 of the stem adapter 406 may be configured to fit into the connection aperture 404 so that when the handle assembly 104 and/or handle adapter 204 is turned, the stem adapter 406 correspondingly turns relative to the base 402. The stem adapter 406 may further include a socket 412 disposed on an internal side (e.g., toward the panel 106) of the stem adapter 406 and configured to receive a first end 414 of the stem 208 (e.g., the stem extension 214).

In embodiments, the support assembly 108 includes a locking plate 416 that is translatably coupled to the base 402 and configured to retain a first end 414 and/or stem extension 214 of the stem 208 when the panel 106 is in a locked configuration. In embodiments, the support assembly 108 includes a spring 418 configured to bias the locking plate 416 toward a first position (e.g., a lock position). For example, the spring 418 may be configured to bias the locking plate 416 from a second position (e.g., an unlock position) to the locked position. The spring 418 may be any type of spring form or type, including, but not limited to, a torsion spring, tension spring, or a compression spring. The base 402 may further include an access hole 405 configured to receive a pin for manually biasing the locking plate 416 from the first position to the second position, as described herein. The locking plate 416 may be excluded in support assemblies where the panel 106 is permanently fixed to the shell 102.

In embodiments, the support assembly 108 includes a back cover 420 couplable to the base 402. The back cover 420 may facilitate the securing of the locking plate 416 and/or spring 418 to the base 402. The back cover 420 may also facilitate guiding the first end 414 of the stem 208 and/or stem extension into the stem adapter 406 via a flange 422.

In embodiments, the support assembly 108 may include different sets of components (e.g., based on the type of electrical box 100, 200 used). For example, the support assembly 108 may include the base 402, the stem adapter 406, the locking plate 416, and the back cover 420 for electrical boxes 100, 200 where breakers are used (e.g., for use with steel handles). In another example, the support assembly 108 may exclude the use of the locking plate 416 and/or back cover 420.

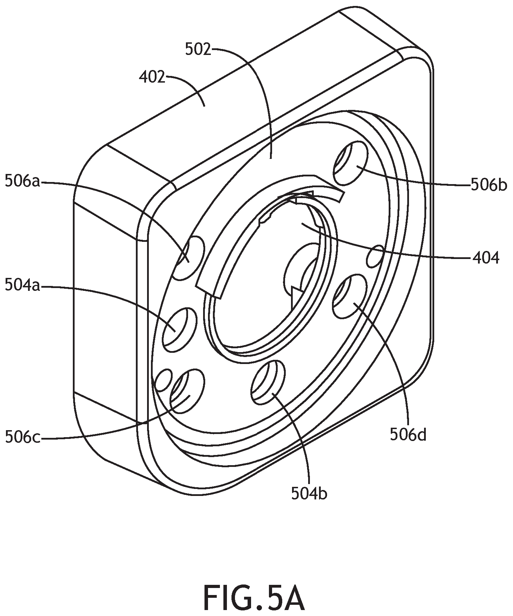

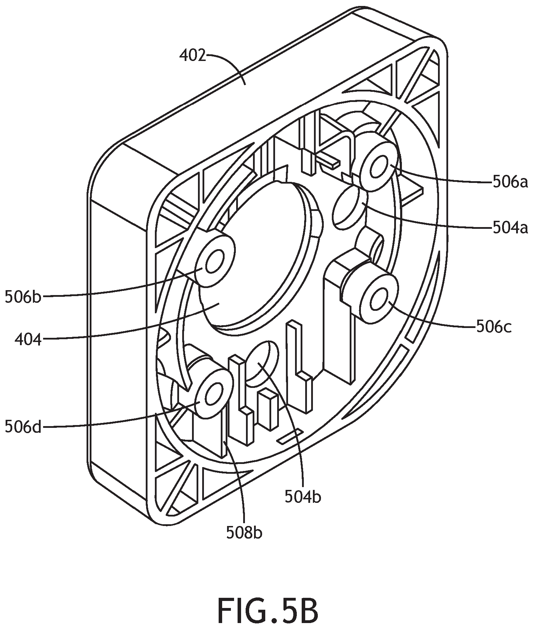

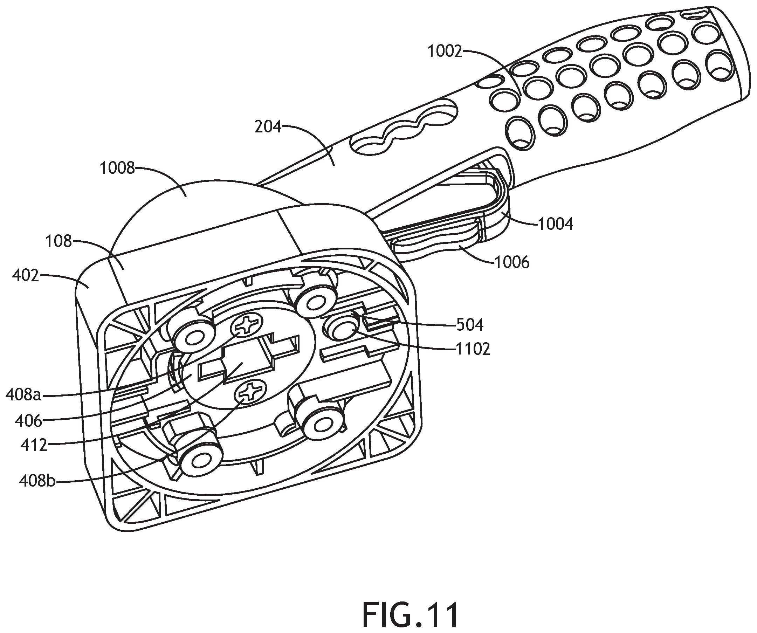

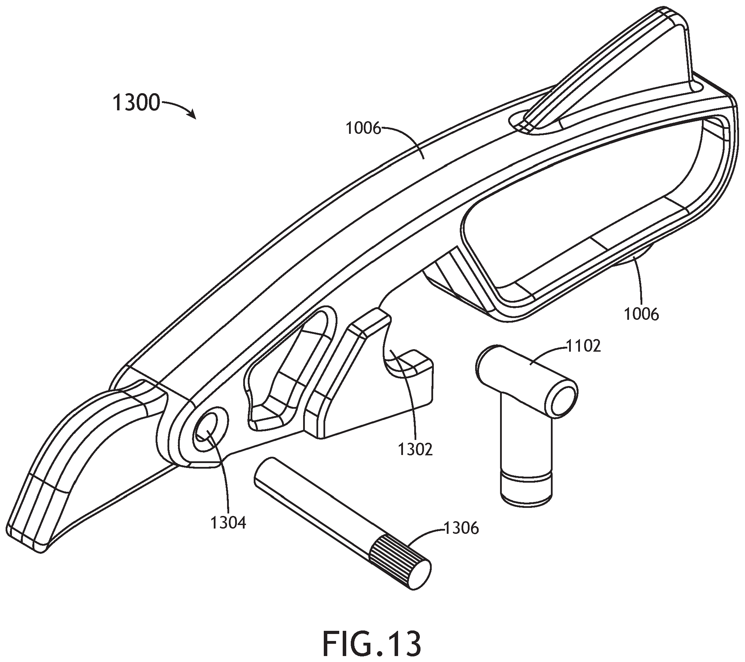

FIGS. 5A and 5B illustrate perspective views of the base 402, in accordance with one or more embodiments of the disclosure. The base 402 may include a groove 502 configured to accept the stem adapter 406, facilitating the stable rotation of the stem adapter 406 relative to the base 402. The base 402 may include one or more lock apertures 504a, 504b configured to receive a lock pin, such as a lock pin from the handle assembly 104 and/or handle adapter 204 (see lock pin 1102 in FIGS. 11 and 13). For example, when the lock pin from the handle assembly 104 is extended into one of the lock apertures 504a-b, the handle assembly 104 is in a locked position and is unable to rotate relative to the base 402. In embodiments, the base 402 includes at least one base fastener aperture 506a, 506b, 506c, 506d configured to receive a base fastener (e.g., a screw), wherein the base fastener is configured to secure the base 402 to the panel 106. The base 402 may include one or more guides 508a, 508b configured to guide the locking plate 416 as the locking plate 416 translates from the first position to the second position.

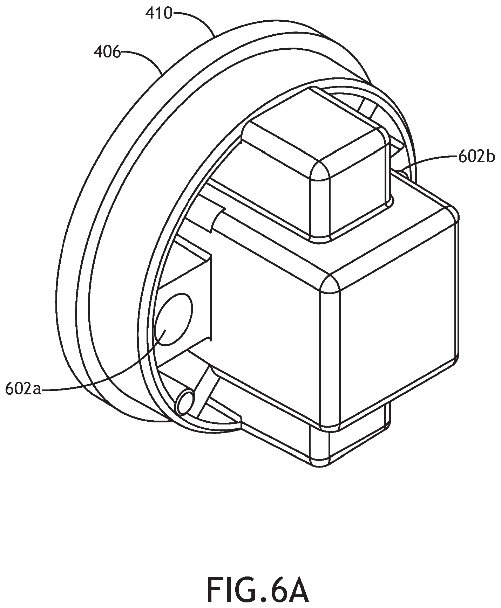

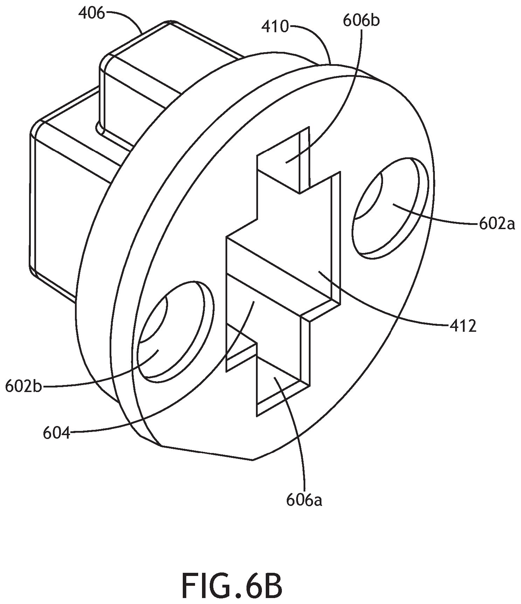

FIGS. 6A and 6B illustrate perspective views of the stem adapter 406 (e.g., a tap-off box adapter lock), in accordance with one or more embodiments of the disclosure. The views illustrate the perimeter 410 of the stem adapter 406 configured to fit within the groove 502 of the base 402. The stem adapter 406 may include one or more adapter fastener apertures 602a, 602b configured to receive the one or more handle fasteners 408a, 408b.

The socket 412 may include any size or shape of recess configured to receive the stem extension 214 and/or first end 414 of the stem 208. For example, the socket 412 may include a central region 604 that is similar to the shape of the stem 208, and one or more outer regions 606a, 606b configured to accommodate one or more catch elements 210.

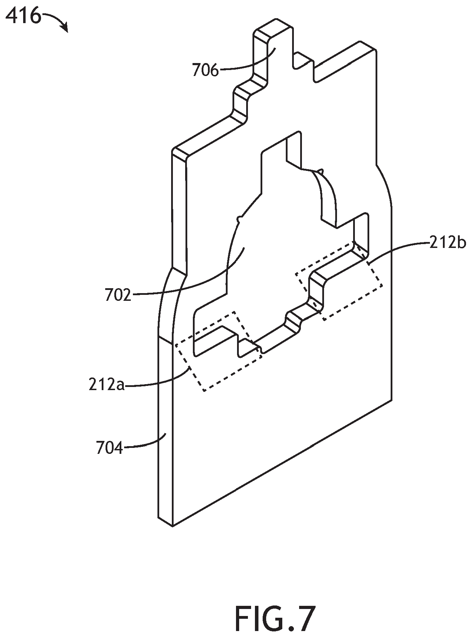

FIG. 7 is a perspective view of the locking plate 416, in accordance with one or more embodiments of the disclosure. In embodiments, the locking plate 416 includes a plate aperture 702 that permits the stem extension 214 and/or first end 414 of the stem 208 to pass through the locking plate 416 and into the socket 412 of the stem adapter 406. The locking plate 416 may further include one or more glide surfaces 704 configured to glide along a corresponding one or more guides 508a-b of the base 402 as the locking plate moves between the first position and second position. The locking plate 416 may include one or more spring securement structures 706 configured to facilitate the securing of the spring 418 to the locking plate 416. The locking plate 416 may include one or more lock elements 212a, 212b, indicated by dotted boxes. The lock elements 212a-b block the catch elements 210 on the stem extension 214 and/or first end 414 of the stem from releasing from the support assembly 108.

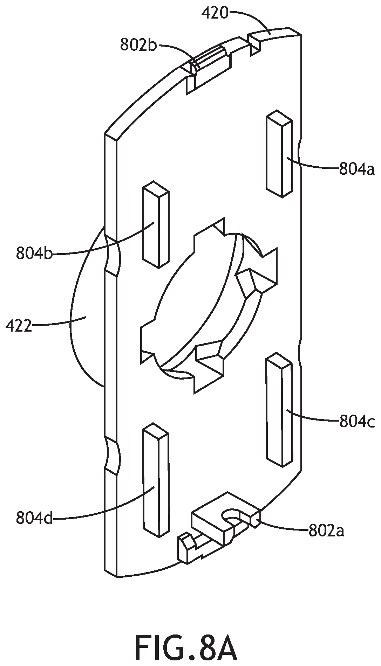

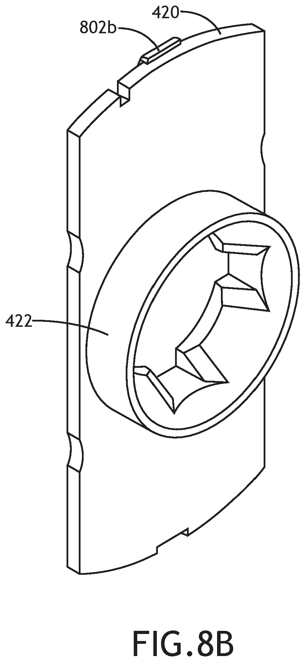

FIGS. 8A and 8B illustrate perspective views of the back cover 420, in accordance with one or more embodiments of the disclosure. The back cover 420 may include one or more coupling structures 802a-b configured to facilitate the coupling of the back cover 420 to the base 402. The coupling structures 802a, 802b may utilize any type of coupling mechanism, including, but not limited to, an interference fit, or a friction fit. The back cover 420 may include one or more guides 804a, 804b, 804c, 804d configured to guide the locking plate 416 as it translates between the first position and the second position.

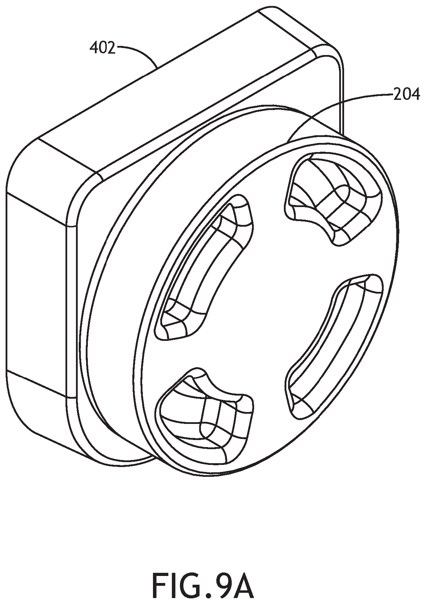

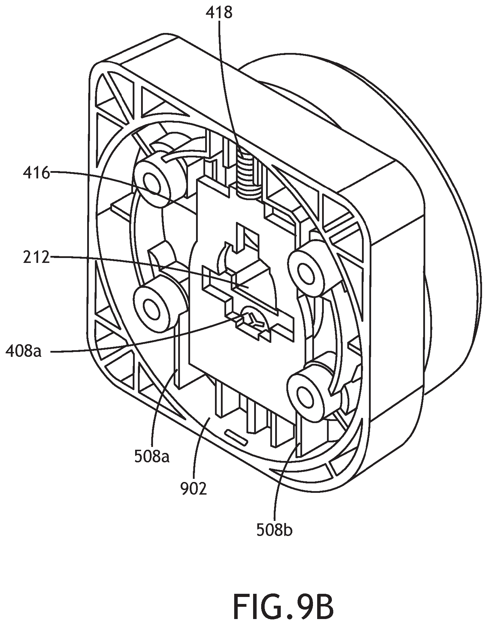

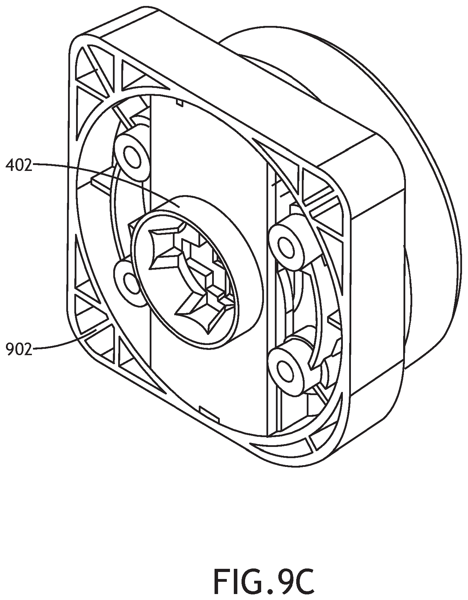

FIGS. 9A to 9C illustrate perspective views of the handle adapter 204 coupled to the base 402, in accordance with one or more embodiments of the disclosure. The handle adapter 204 is configured to rotate along a central axis relative to the base 402. In FIG. 9B, an underside 902 of the base reveals the locking plate 416 positioned between guides 508a-b. In FIG. 9C, the back cover 420 is installed, hiding the locking plate 416 from view.

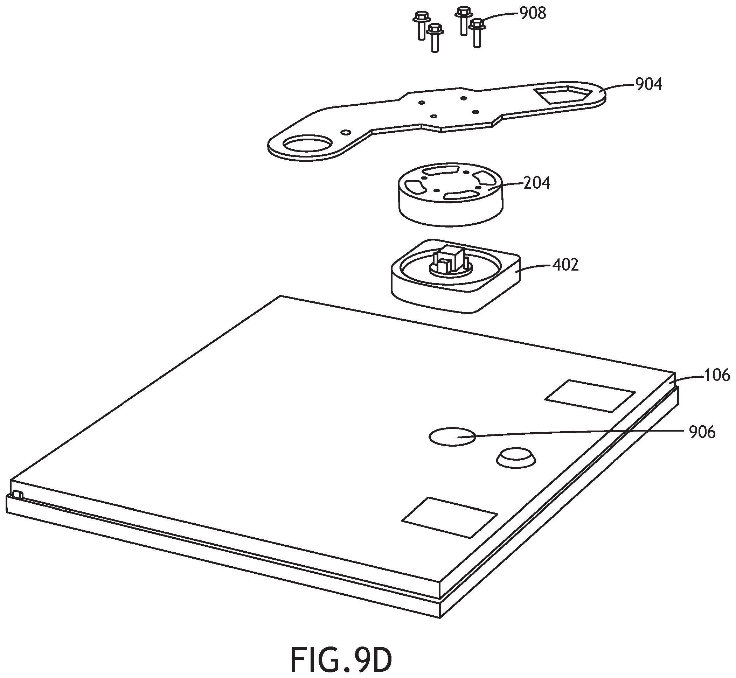

FIG. 9D illustrates an exploded view of a second handle 904, handle adapter 204, base 402, and door panel 106 (e.g., with door panel opening 908), in accordance with one or more embodiments of the disclosure. The second handle 904 is couplable to the handle adapter 204 via handle fasteners 906 (e.g., screws, such as flange screws or serrated flange screws).

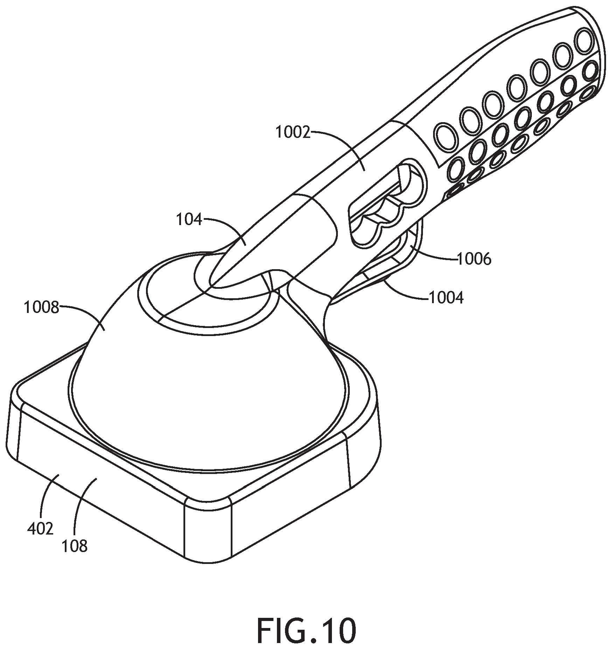

FIG. 10 illustrates a top perspective view of the handle assembly 104 rotationally coupled to the support assembly 108, in accordance with one or more embodiments of the disclosure. In embodiments, the handle assembly 104 includes a handle arm 1002 and may include a trigger arm 1004 (e.g., handle locking arm) that may include a trigger 1006. The handle assembly 104 may include a cover 1008 configured to hide portions of the handle assembly 104 and support assembly 108 from view.

FIG. 11 illustrates a bottom perspective view of the handle assembly 104 rotationally coupled to the support assembly 108, in accordance with one or more embodiments of the disclosure.

In embodiments, the handle assembly 104 includes a lock pin 1102 configured to insert into the lock aperture 504 of the base 402 when the trigger 1006 is in a released position. When the trigger 1006 is not activated, the lock pin 1102 prevents a rotation of the handle assembly 104 relative to the support assembly 108 or base 402.

When the trigger is activated (e.g., by gripping the trigger with the handle arm 1002), the lock pin is removed from the lock aperture 504, allowing the handle assembly 104 to be rotated relative to the base 402.

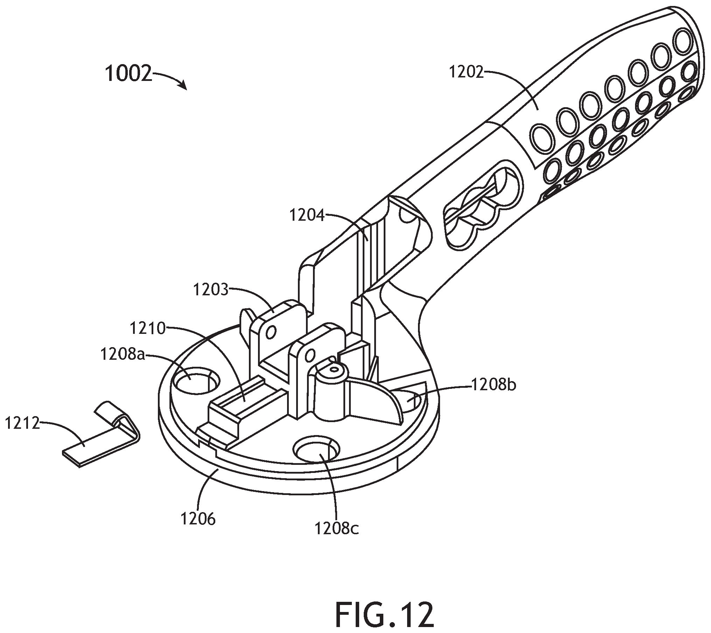

FIG. 12 illustrates a perspective view of the handle arm 1002, in accordance with one or more embodiments of the disclosure. The handle arm 1002 may include a grip 1202, a shaft 1204 for securing the trigger arm 1004, and a face plate 1206 configured to interface with the base 402. The handle arm may further include one or more cover attachment points 1208a, 1208b, 1208c that facilitate the coupling of the cover 1008 to the handle arm 1002.

In embodiments, the handle arm 1002 includes a fulcrum 1203 (e.g., a pivot point) that is coupled to the trigger arm 1004 and an anvil 1210 configured to couple with an end of the trigger arm 1004. The anvil 1210 may be further configured to receive a handle spring 1212 that resists the pulling of the trigger arm 1004.

FIG. 13 illustrates a perspective view of a trigger arm assembly 1300 (e.g., a handle locking arm assembly) that includes the trigger arm 1004, in accordance with one or more embodiments of the disclosure. The trigger arm assembly 1300 may include a hook 1302 that is mechanically coupled to the lock pin 1102. The trigger arm assembly 1300 may include a pivot aperture 1304 configured to couple to the fulcrum 1203 via a pivot pin 1306. When fully assembled with the handle assembly 104, a pulling-up of the trigger arm 1004 at the trigger 1006 causes the trigger arm 1004 to pivot at the fulcrum 1203, causing the hook 1302 to lift the lock pin 1102 out from the lock aperture 504.

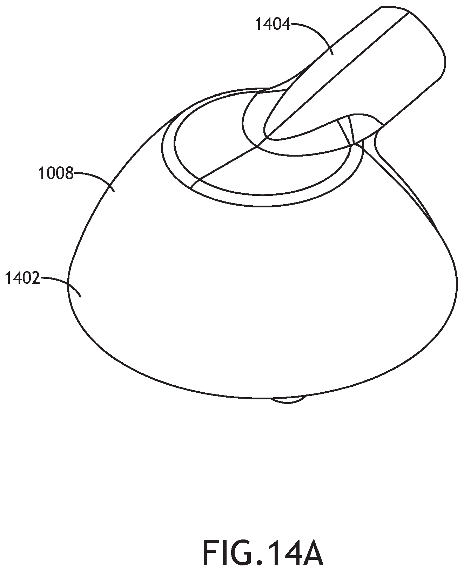

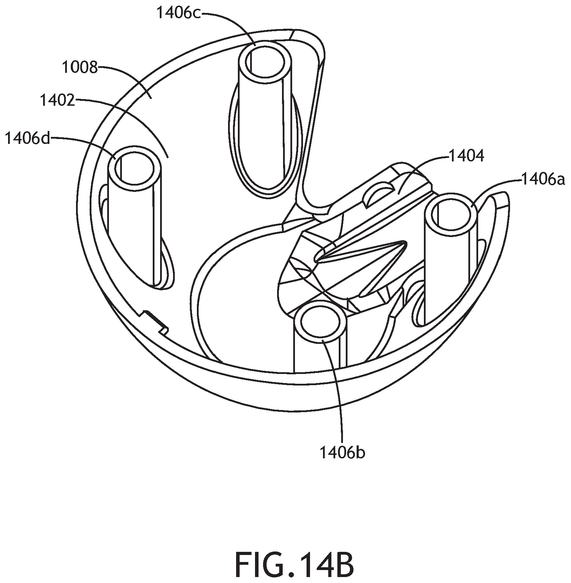

FIGS. 14A and 14B illustrate perspective views of the cover 1008, in accordance with one or more embodiments of the disclosure. In embodiments, the cover 1008 includes a shield portion 1402 that covers the face plate 1206 portion of the handle arm 1002. In embodiments, the cover 1008 includes a handle portion 1404 that covers a portion of the handle area and/or grip 1202 of the handle arm 1002. The cover may include one or more attachment sites 1406a, 1406b, 1406c, 1406d that couple to the one or more corresponding attachment points 1208a-c.

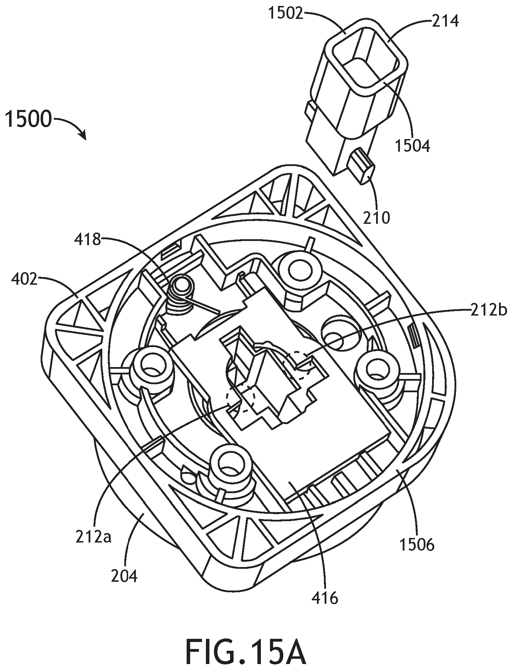

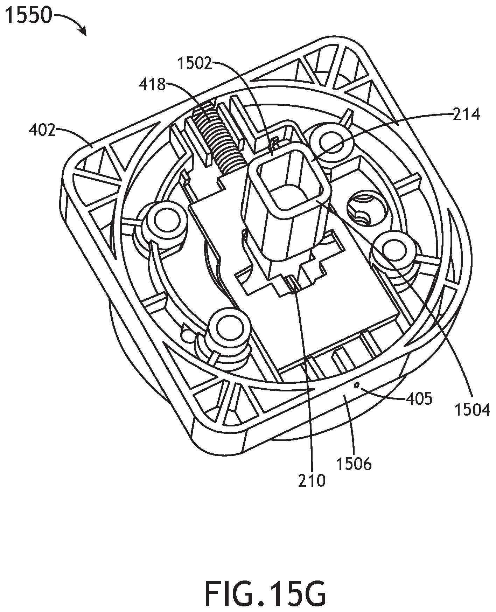

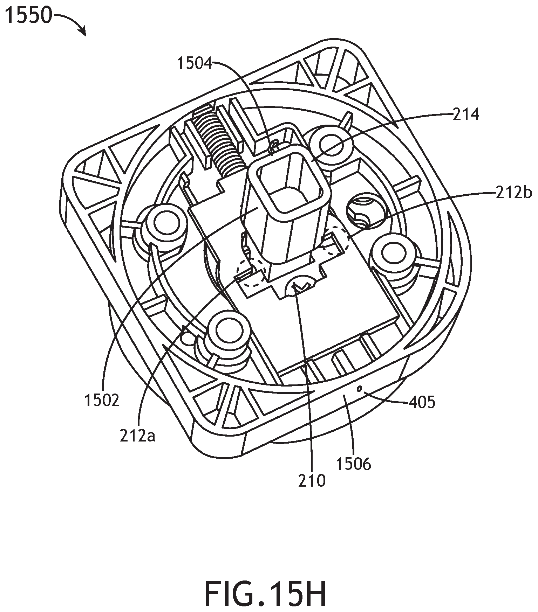

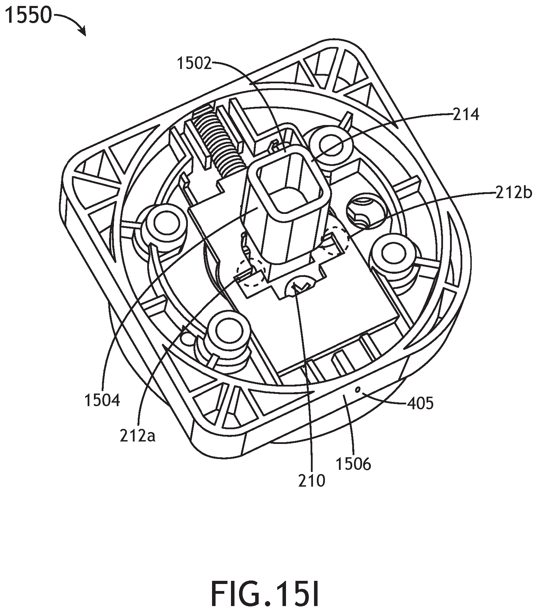

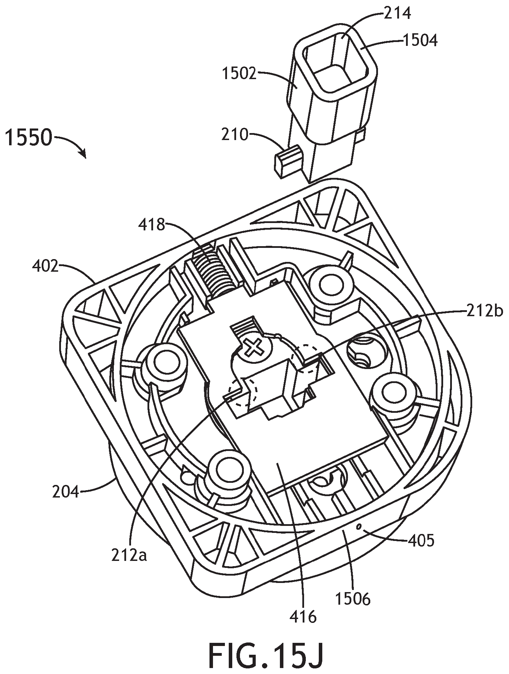

FIGS. 15A-15E illustrate an underside perspective view of a handle-base unit 1500 (e.g., comprising handle adapter 204 and base 402) reversibly coupling to the stem extension 214, in accordance with one or more embodiments of the disclosure. While the handle adapter 204 is shown interacting with the handle-base unit 1500, the first end 414 of the stem 208 may similarly interact with the handle-base unit 1500. Therefore, the above description should not be interpreted as a limitation of the present disclosure, but as an illustration.

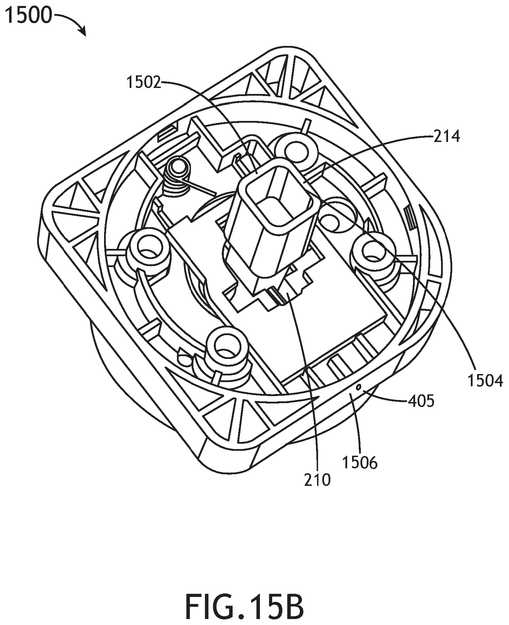

Referring to FIG. 15A, the stem extension 214 is shown in a pre-insert position, where the catch element 210 aligns with the plate aperture 702. In FIG. 15B, the stem extension 214 is shown inserted into the plate aperture 702. In both FIG. 15A and 15B, the handle-base unit 1500 is configured in an OFF configuration, as the power switch 206, controlled by the position of the stem extension 214, is switched to an OFF condition with no power running through the electrical box 200. In the OFF condition, the stem extension 214 can freely insert into and exit out of the plate aperture 702. For example, when the handle-base unit 1500 is installed onto the electrical box 200 and the power switch 206 is in the OFF condition, the panel 106 may freely open and close, as the catch element 210 is not blocked by the lock elements 212a-b. A first side 1502 and a second side 1504 of the stem extension 214 are shown, illustrating that the stem extension 214 has not been rotated after insertion into the plate aperture 702.

When the handle-base unit 1500 is configured in the OFF configuration, the locking plate 416 is oriented in a first position, which allows the stem extension 214 to be locked within the plate aperture 702 when the stem extension 214 is turned clockwise or counterclockwise. The spring 418 (e.g., a torsion spring) biases the locking plate 416 into the first position, where the locking plate 416 is translated toward a rear end 1506 of the base 402.

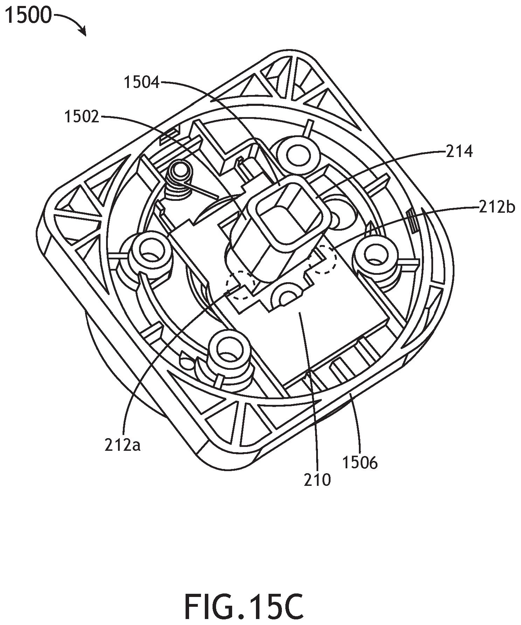

Referring to FIG. 15C, the handle-base unit 1500 is shown in an ON configuration where the stem extension 214 is inserted into the plate aperture 702 and rotated to the left 90° so that the first side 1502 of the stem extension 214 is facing to the left, and the second side 1504 is facing to the right. The locking plate 416 is biased by the spring 418 into the first position. The catch elements 210 are hidden by the lock elements 212a-b, which lock (e.g., retain) the stem extension 214 within the plate aperture 702.

When inserted into the handle-base unit 1500 and rotated to the ON configuration, the power switch 206 is then switched to an ON condition where power flows through the electrical box 200. The stem extension 214 is also locked into the plate aperture 702, and the panel 106 cannot be opened. In other words, a retention of the catch element 210 by the lock element 212a-b of the locking plate 416 prevents the panel 106 from pivoting from a closed position to an open position.

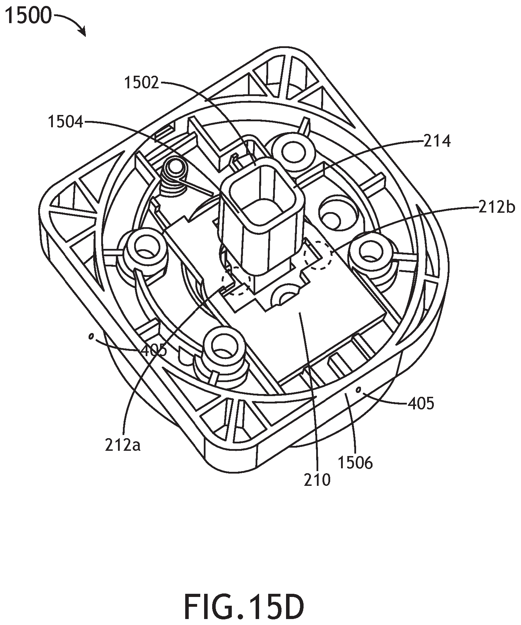

Referring to FIG. 15D, the handle-base unit 1500 is shown in a BDS configuration where the stem extension 214 is inserted into the plate aperture 702 and rotated to the right 90° so that the first side 1502 of the stem extension 214 is facing to the right, and the second side 1504 is facing to the left. The locking plate 416 is biased by the spring 418 into the first position. The catch elements 210 are hidden by the lock elements 212a-b, which lock the stem extension 214 within the plate aperture 702.

When inserted into the handle-base unit 1500 and rotated to the BDS configuration, the power switch 206 is then switched to a BDS condition where back-up power flows through the electrical box 200. The stem extension 214 is also locked into the 702, and the panel 106 cannot be opened.

While the handle-base unit 1500 is shown having both an ON configuration and a BDS condition, and the power switch 206 is shown having both an ON condition and an OFF condition, the handle-base unit 1500 may be configured to not have a BDS configuration, and the power switch 206 may be configured to not have a BDS condition. Therefore, the above description should not be interpreted as a limitation of the present disclosure, but as an illustration.

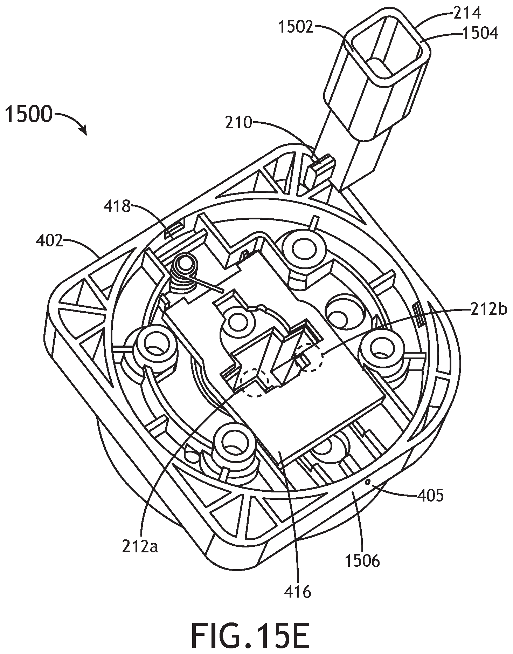

Referring to FIG. 15E, the handle-base unit 1500 is shown in an override position where the locking plate 416 has been biased against the action of the spring, forcing the locking plate 416 to translate forward into a second position away from the rear end 1506 of the base 402. Translating the locking plate 416 from the first position (e.g., a lock position) to the second position (e.g., an unlock position) translates the lock elements 212a-b away from the catch element 210, allowing the stem extension 214 to be removed from the handle-base unit 1500. The locking plate 416 may be translated from the first position to the second position via a pin positioned within the access hole 405 in the base 402 that biases the locking plate 416. In other words, the locking plate 416, adjacent to the access hole 405, is manually translatable against the bias of the spring by the inserted pin pushing against the side of the locking plate 416, which moves the lock elements 212a-b out of engagement with the catch element 210. When integrated into an electrical box 200, placing the handle-base unit 1500 into the override position allows the panel 106 to be opened even if the power switch has been switched to an ON position or a BDS position.

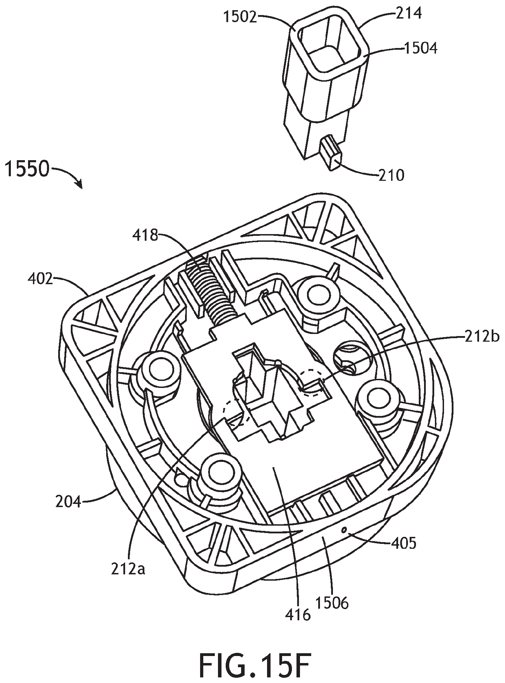

FIGS. 15F-15J illustrate an underside perspective view of a handle-base unit 1550 in accordance with one or more embodiments of the disclosure. Handle-base unit 1550 includes similar componentry to that of handle-base unit 1500, with one difference being that spring 418 is configured as a compression spring. Handle-base unit 1550 functions similarly to handle-base unit 1500, as shown by FIGS. 15F-15J, which illustrate functions and componentry positions corresponding to FIGS. 15A-15E that illustrate handle-base unit 1500.

In a general sense, those skilled in the art will recognize that the various aspects described herein, which can be implemented, individually and/or collectively, by a wide range of hardware, software, firmware, or any combination thereof, can be viewed as being composed of various types of "electrical circuitry." Consequently, as used herein, "electrical circuitry" includes, but is not limited to, electrical circuitry having at least one discrete electrical circuit, electrical circuitry having at least one integrated circuit, electrical circuitry having at least one application-specific integrated circuit, electrical circuitry forming a general-purpose computing device configured by a computer program (e.g., a general-purpose computer configured by a computer program which at least partially carries out processes and/or devices described herein, or a microprocessor configured by a computer program which at least partially carries out processes and/or devices described herein), electrical circuitry forming a memory device (e.g., forms of random access memory), and/or electrical circuitry forming a communications device (e.g., a modem, communications switch, or optical-electrical equipment). Those having skill in the art will recognize that the subject matter described herein may be implemented in an analog or digital fashion or some combination thereof.

Those having skill in the art will recognize that it is common within the art to describe devices and/or processes in the fashion set forth herein, and thereafter use engineering practices to integrate such described devices and/or processes into data processing systems. That is, at least a portion of the devices and/or processes described herein can be integrated into a data processing system via a reasonable amount of experimentation. Those having skill in the art will recognize that a typical data processing system generally includes one or more of a system unit housing, a video display device, a memory such as volatile and non-volatile memory, processors such as microprocessors and digital signal processors, computational entities such as operating systems, drivers, graphical user interfaces, and application programs, one or more interaction devices, such as a touch pad or screen, and/or control systems including feedback loops and control motors (e.g., feedback for sensing position and/or velocity; control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediate components. Likewise, any two components so associated can also be viewed as being "operably connected", or "operably coupled", to each other to achieve the desired functionality, and any two components capable of being so associated can also be viewed as being "operably couplable" to each other to achieve the desired functionality. Specific examples of operably couplable components include but are not limited to physically mateable and/or physically interacting components and/or wirelessly interactable and/or wirelessly interacting components and/or logically interacting and/or logically interactable components.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein. Furthermore, it is to be understood that the invention is defined by the appended claims.

## Claims

1. A system comprising:
a support assembly (108) for a handle (104) comprising:
a base (402) configured to couple to a first side of a door panel (106) and over a door panel opening (908), comprising:
at least one base fastener aperture (506a, 506b, 506c, 506d) configured to receive a base fastener, wherein the base fastener is configured to secure the base to the door panel; and
a connection aperture (404) configured to align with the door panel opening and facilitate a connection of at least one of a handle or a handle adapter (204) to a stem of a switch (208); and
a stem adapter (406) configured to rotationally couple to the base, the stem adapter comprising:
a socket (412) disposed on an internal side of the stem adapter and configured to receive a first end of the stem of the switch;
at least one adapter fastener aperture (602a, 602b) configured to receive a handle fastener (408a, 408b), wherein the handle fastener is configured to couple the stem adapter to the handle assembly or the handle adapter, wherein a rotation of the handle assembly or the handle adapter is configured to cause the stem of the switch to rotate when the stem is received within the socket; and
a lock aperture (504) configured to receive a lock pin (1102) from the handle assembly, wherein the lock aperture receiving the lock pin prevents the at least one of the handle assembly or the handle adapter from rotating relative to the base.

2. The system of claim 1, wherein the base further comprises a locking plate (416) coupled to the base and configured to translate relative to the base, wherein the locking plate is configured to retain the first end of the stem within the socket when the panel is closed, and the locking plate is translated to a first position.

3. The system of claim 2, wherein the locking plate comprises a lock element (212a, 212b) that retains a catch element (210) of the first end of the stem when the locking plate is translated to the first position, wherein the locking plate does not retain the catch element when the locking plate is translated to a second position.

4. The system of claim 3, wherein the locking plate is configured so that a retention of the catch element by the lock element prevents the door panel from pivoting from a closed position to an open position.

5. The system of claim 4, wherein the base further comprises a spring (418) configured to bias the locking plate from the second position to the first position.

6. The system of claim 5, wherein the locking plate is manually translatable against the bias of the spring from the first position to a second position, the second position moving the lock element out of engagement with the catch element to permit removal of the stem from the support assembly and allow the door panel to pivot from the closed position to the open position, and optionally wherein the base comprises an access hole (405) adjacent to the locking plate and configured to receive a pin, wherein the locking plate may be biased by the pin to translate from the first position to the second position.

7. The system of any preceding claim, further comprising the handle adapter, wherein the handle adapter is rotationally coupled to the base, wherein the handle adapter is couplable to a handle via one or more fasteners, and/or, further comprising the handle assembly, the handle assembly comprising:
a handle arm (1002) configured to couple to the stem adapter and rotationally couple to the base;
a lock pin (1102) configured to insert into a lock aperture (504) of the base, wherein an insertion of the lock pin into the lock aperture prevents a rotation of the handle assembly relative to the base; and
a trigger arm (1004) mechanically coupled to the handle arm and the lock pin, wherein the trigger arm is configured to release the lock pin from the lock aperture when the trigger arm is activated.

8. A system comprising:
a handle assembly (104) for a door panel, the handle assembly comprising:
a handle arm configured to couple to a stem adapter, wherein the handle arm is rotationally coupled to a base that is coupled to the door panel,
a lock pin configured to insert into a lock aperture of the base, wherein an insertion of the lock pin into the lock aperture prevents a rotation of the handle assembly relative to the base; and
a trigger arm mechanically coupled to the handle arm and the lock pin, wherein the trigger arm is configured to release the lock pin from the lock aperture when the trigger arm is activated.

9. The system of claim 8, further comprising:
a support assembly for the handle assembly comprising:
a base configured to couple to a first side of a door panel, the base comprising:
at least one base fastener aperture configured to receive a base fastener, wherein the base fastener is configured to secure the base to the door panel; and
a connection aperture configured to facilitate a connection of the handle assembly to a stem of a switch; and
a stem adapter configured to rotationally couple to the base at the connection aperture, the stem adapter comprising:
a socket configured to receive a first end of the stem;
at least one adapter fastener aperture configured to receive a handle fastener, wherein the handle fastener is configured to couple the stem adapter to the handle assembly, wherein a rotation of the handle assembly is configured to cause the stem of the switch to rotate when the stem is received within the socket; and
a lock aperture configured to receive a lock pin, wherein the lock aperture receiving the lock pin prevents the handle assembly from rotating relative to the base.

10. An electrical box (200) comprising:
a shell (102) comprising a door panel;
a power switch within the shell and disposed on an opposite side of the door panel, the power switch comprising a stem extending from the opposite side of the door panel toward the door panel, the stem comprising a catch element; and
a support assembly for at least one of a handle assembly or a handle adapter comprising:
a base configured to couple to a first side of the door panel and over a door panel opening, comprising:
at least one base fastener aperture configured to receive a base fastener, wherein the base fastener is configured to secure the base to the door panel; and
a connection aperture configured to align with the door panel opening and facilitate a connection of the handle assembly to a stem of a switch; and
a stem adapter configured to rotationally couple to the base, the stem adapter comprising:
a socket disposed on an internal side of the stem adapter and configured to receive a first end of the stem of the switch;
at least one adapter fastener aperture configured to receive a handle fastener, wherein the handle fastener is configured to couple the stem adapter to a handle assembly or a handle adapter; and
a lock aperture configured to receive a lock pin, wherein the lock aperture receiving the lock pin prevents the at least one of the handle assembly and the handle adapter from rotating relative to the base.

11. The electrical box of claim 10, wherein the base further comprises a locking plate coupled to the base and configured to translate relative to the base, wherein the locking plate is configured to retain the first end of the stem within the socket when the door panel is closed, and the locking plate is translated to a first position.

12. The electrical box of claim 11, wherein the locking plate comprises a lock element that retains the catch element of the first end of the stem when the locking plate is translated to the first position, wherein the locking plate does not retain the catch element when the locking plate is translated to a second position.

13. The electrical box of claim 12, wherein the locking plate is configured so that a retention of the catch element by the lock element prevents the door panel from pivoting from a closed position to an open position.

14. The electrical box of claim 13, wherein the base further comprises a spring configured to bias the locking plate from the second position to the first position, and optionally, wherein the locking plate is manually translatable against the bias of the spring from the first position to a second position, the second position moving the lock element out of engagement with the catch element to permit removal of the stem from the support assembly and allow the door panel to pivot from the closed position to the open position, and further optionally, wherein the base comprises an access hole adjacent to the locking plate and configured to receive a pin, wherein the locking plate may be biased by the pin to translate from the first position to the second position.

15. The electrical box of any of claims 10 to 14, further comprising the handle adapter, wherein the handle adapter is rotationally coupled to the base, wherein the handle adapter is couplable to a handle via one or more fasteners, and/or further comprising the handle assembly, the handle assembly comprising:
a handle arm configured to couple to the stem adapter and rotationally couple to the base;
the lock pin; and
a trigger arm mechanically coupled to the handle arm and the lock pin, wherein the trigger arm is configured to release the lock pin from the lock aperture when the trigger arm is activated.
